Europäisches Patentamt

European Patent Office

Office européen des brevets

(19)

(11) Veröffentlichungsnummer: **0 008 590**
**B1**

(12) **EUROPÄISCHE PATENTSCHRIFT**

(45) Veröffentlichungstag der Patentschrift: **16.11.83**

(21) Anmeldenummer: **78100805.7**

(22) Anmeldetag: **01.09.78**

(51) Int. Cl.³: **F 03 D 3/06, F 03 B 17/06, F 16 H 37/12, B 60 F 3/00**

(54) **Strömungsmaschine.**

(43) Veröffentlichungstag der Anmeldung:
**19.03.80 Patentblatt 80/6**

(45) Bekanntmachung des Hinweises auf die Patenterteilung:
**16.11.83 Patentblatt 83/46**

(84) Benannte Vertragsstaaten:
**BE CH DE FR GB LU NL SE**

(56) Entgegenhaltungen:
**DE - B - 1 056 550
FR - A - 1 014 530
FR - A - 2 286 292
FR - A - 2 290 584
US - A - 1 577 096
US - A - 3 810 712**

(73) Patentinhaber: **Friedl, Friedrich
Ortlindestrasse 15
D-8000 München 81 (DE)**

(72) Erfinder: **Friedl, Friedrich
Ortlindestrasse 15
D-8000 München 81 (DE)**

Courier Press, Leamington Spa, England.

## Strömungsmaschine

Die Erfindung bezieht sich auf eine als Arbeits — oder Kraftmaschine ausgebildete Strömungsmaschine mit einer senkrecht zur Strömungsrichtung angeordneten Zentralachse und mit in einem mit der Zentralachse verbundenen Trägerteil drehbar gehaltenen Drehflügeln, welche mittels zur Zentralachse parallelen Flügelachsen auf einer Kreisbahn umlaufen, deren Ebene parallel zur Strömungsrichtung liegt, wobei sich die Mittelebenen aller Drehflügel in jeder Umlaufstellung in einer Achse schneiden, welche durch einen Punkt der Umlaufkreisbahn führt, an dem die Strömungsrichtung den Umlaufkreis tangiert, wobei beim Umlauf der Drehflügel die Lage dieser Schnittachse unverändert bleibt.

Eine derartige, als Windkraftmaschine ausgebildete Strömungsmaschine ist aus der FR—A— 1 014 530 (MERMET) bekannt, in welcher parallel zur Zentralachse angeordnete und gehaltene Drehflügel über ein Zahnradgetriebe gesteuert sind, das, ausgehend von einem auf der Zentralachse frei laufenden Zahnrad über ein Umkehrzahnrad in ein Zahnrad auf der Flügelachse greift und die Drehbewegung der Zentralachse in gleicher Richtung mit halber Geschwindigkeit auf die Drehflügel überträgt.

Eine weitere, als Einflügelwindkraftmaschine ausgebildete Strömungsmaschine beschreibt die DE—B—1 056 550 (GOLDAU), in welcher die Zentralachse mit einem rechtwinkelig zu ihr stehenden Trägerarm verbunden ist, in welchem ein mit einem Zahnrad verbundener Drehflügel frei drehbar angeordnet ist. Gesteuert wird das Flügelzahnrad von einem durch eine Windfahne verstellbaren Steuerzahnrad über ein Umkehrzahnrad. Die auftretenden Unwuchtfliehkräfte der Anlage werden durch ein Gegengewicht ausgeglichen.

Bei den vorgenannten Windkraftmaschinen ist der Steuermechanismus für die einzelnen Flügel sehr aufwendig, da für jeden Drehflügel eine eigene Zahnradübertragung benötigt wird, was sich auch auf den Wirkungsgrad der Anlagen nachteilig auswirken wird. Ein selbständiges Anlaufen und eine Leistungsabgabe bei schwankenden Strömungsverhältnissen wird dabei sehr beeinträchtigt, wenn nicht sogar verhindert.

Aus dem in der V.D.I.-Zeitschrift (Herausgeber: V.D.I. Verlag Düsseldorf, B.R.D.) veröffentlichte Artikel "Drehkolbenverdichter" von P. Grote, vom 01.07.1960, Band 102, Heft 22, Seite 1076, ist ferner eine nach dem oben angeführten Prinzip arbeitende Drehkolbenmaschine bekannt, deren trochoidenförmige, um ihre Achse drehenden Umlaufkolben ein ringförmiges Fördergehäuse durchlaufen, wobei die Ansaug und Druckseite einerseits durch einen, dem Längsprofil des Kolbens entsprechenden Kanal, andererseits durch eine dem Querprofil entsprechend geschlitzte Wand getrennt sind, durch die die Kolben in entsprechender Lage kreisen.

Der Erfindung liegt die Aufgabe zugrunde, die vorgenannten Schwächen und Mängel zu beseitigen und mit einfachen, konstruktiven Mitteln eine Strömungsmaschine der eingangs genannten Art derart zu steuern, daß bei einer Vielzahl von Flügeln ein gleichmäßiger Lauf und eine Leistung mit hohem Wirkungsgrad erzielt wird, wobei auch bei schwacher und unregelmäßiger Strömung ein einwandfreies Funktionieren gewährleistet werden soll.

Die Erfindung löst die gestellte Aufgabe dadurch, daß senkrecht zur Zentralachse ein scheibenförmiges Steuerorgan vorgesehen ist, das mit einer, exzentrisch zur Zentralachse liegenden Innen- oder Außenverzahnung versehen ist, wobei parallel zur Zentralachse Kurbeln vorgesehen sind, die jeweils an einem Ende mit den Flügelachsen fest verbunden sind und am anderen Ende frei drehbar in dem Steuerorgan gelagert sind und daß das Steuerorgan mit seiner Verzahnung über ein, um die Zentralachse umlaufendes Zahnrad eingreift, welches mit einem zentrisch angeordneten, festsetz- oder steuerbaren Zahnrad kämmt, wobei das Verhältnis des Wälzkreises der Verzahnung des Steuerorganes zum Wälzkreis des festsetz- oder steuerbaren Zahnrades, sowie das Verhältnis des Hebelarmes der Kurbeln zum Wälzkreisdurchmesser des umlaufenden Zahnrades jeweils 1 zu 1 ist.

In den Zeichnungen werden Ausführungsbeispiele der Erfindung dargestellt.

Fig. 1 zeigt das Prinzip einer in einer Parallelströmung angeordneten Strömungsmaschine.

Fig. 2 zeigt einen Axialschnitt durch eine erste Ausführungsanordnung der erfindungsgemäßen Strömungsmaschine.

Fig. 3 zeigt einen Schnitt gemäß III—III der Fig. 2.

Fig. 4 zeigt den Querschnitt einer zweiten Ausführungsanordnung.

Fig. 5 zeigt einen Schnitt gemäß V—V der Fig. 4.

Fig. 6 bis 8 zeigen die Anordnung eines Verbindungssteges.

Fig. 9 zeigt eine weitere Ausführung der Strömungsmaschine.

Fig. 10 zeigt eine in einem Fahrzeug-Antriebsrad eingebaute Strömungsmaschine.

Fig. 11 zeigt eine weitere Ausführung der Strömungsmaschine im Querschnitt.

Fig. 12 zeigt einen Schnitt gemäß XII—XII der Fig. 11.

Weitere Einzelheiten des Gegenstandes der Erfindung ergeben sich aus der nachfolgenden Beschreibung der zugehörigen Zeichnungen.

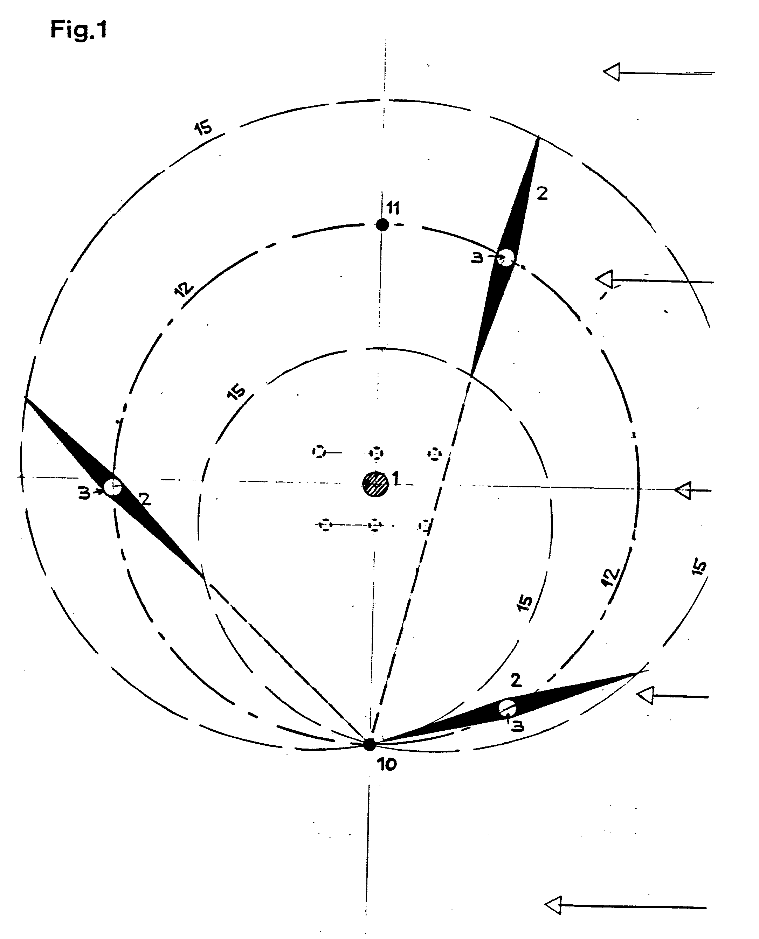

Fig. 1 stellt das Grundschema einer Strömungsmaschine dar, welche in einer mit Pfeilen am rechten Bildrand angedeuteten Parallelströmung angeordnet ist. Die Maschine weist eine senkrecht zur Strömungsrichtung angeordnete Zentralachse 1 sowie mehrere, um Achsen 3 drehbare Flügel 2 auf, wobei die Flügelachsen 3 auf einer Kreisbahn 12 umlaufen. Am Umlaufkreis 12 sind die Punkte 10 und 11 angegeben, bei denen die Strömung diesen tangiert. Die Drehung der Flügel 2 um ihre Achsen 3 ist derart gesteuert, daß die Mittelebenen der Flügel 2 beim Umlauf sich in einer durch den Punkt 10 gehenden Achse schneiden, während diese Mittelebenen beim Durchgang durch den Punkt 11 senkrecht zur Strömungsrichtung stehen. Beim Umlauf der Flügel 2 ergibt sich die Umhüllungskurve 15.

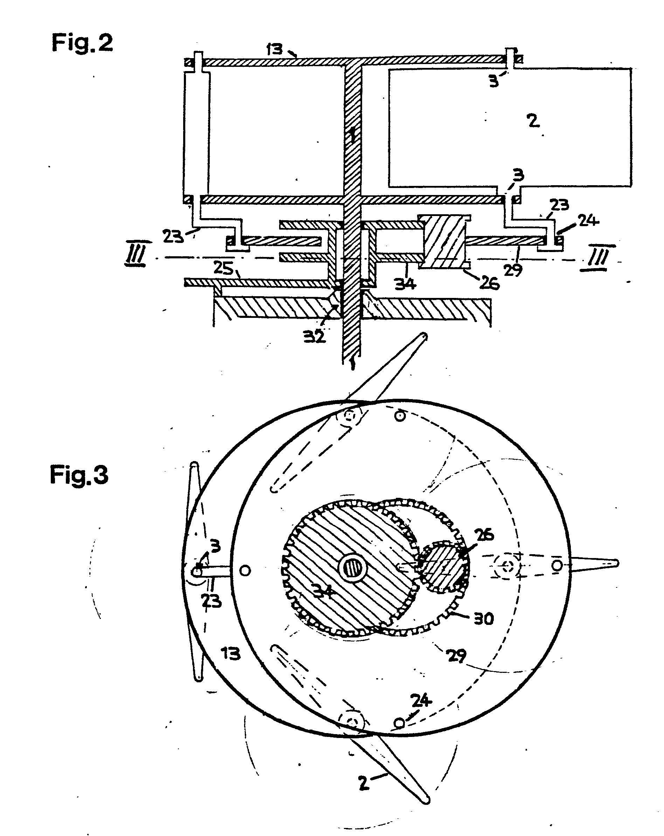

Fig. 2 zeigt eine erste Ausführungsanordnung der Strömungsmaschine. Ein bei (32) gelagerte Zentralachse (1) trägt ein Trägerteil (13), in welchem Flügelachsen (3) drehbar gelagert (4) sind. Mit den Flügelachsen (3) sind Kurbeln (23) verbunden, die an ihrer anderen Ende, frei drehbar gelagert, ein scheibenförmiges Steuerorgan (29) halten. Ein mit Führungsflächen versehenes umlaufendes Zahnrad (26) kämmt mit einer Innenverzahnung des Steuerorgans (29) und mit einem auf der Zentralachse (1) umlaufenden Zahnrad (34), welches als Doppelzahnrad ausgebildet und durch einen Steuerhebel (25) schwenkbar bzw. feststellbar ist.

Fig. 3 stellt den Querschnitt gemäß III—III der Fig. 2 dar und zeigt das umlaufende Zahnrad (26), dessen Wälzkreisdurchmesser dem Hebelarm der Kurbeln (23) entspricht, kämmend mit dem innen verzahnten, als Ring (30) ausgebildeten, exzentrisch zur Zentralachse liegenden Steuerorgan (29), und mit dem, auf der Zentralachse (1) umlaufenden Zahnrad (34), wobei die Wälzkreisdurchmesser der Innenverzahnung des Ringes (30) und des Zahnrades (34) gleich sind.

Im Bewegungsablauf bewirkt das umlaufende Zahnrad (26) eine Positionsveränderung des Steuerorganes (29), welches ober die Kurbeln (23) auf die Flügel (2), derart einwirkt, daß diese in gleicher Richtung mit halber Umdrehungszahl wie die Zentralachse (1) drehen, und dabei immer auf den Punkt (10) des Flügelachsenumlaufkreises (12, Fig. 1) ausgerichtet bleiben.

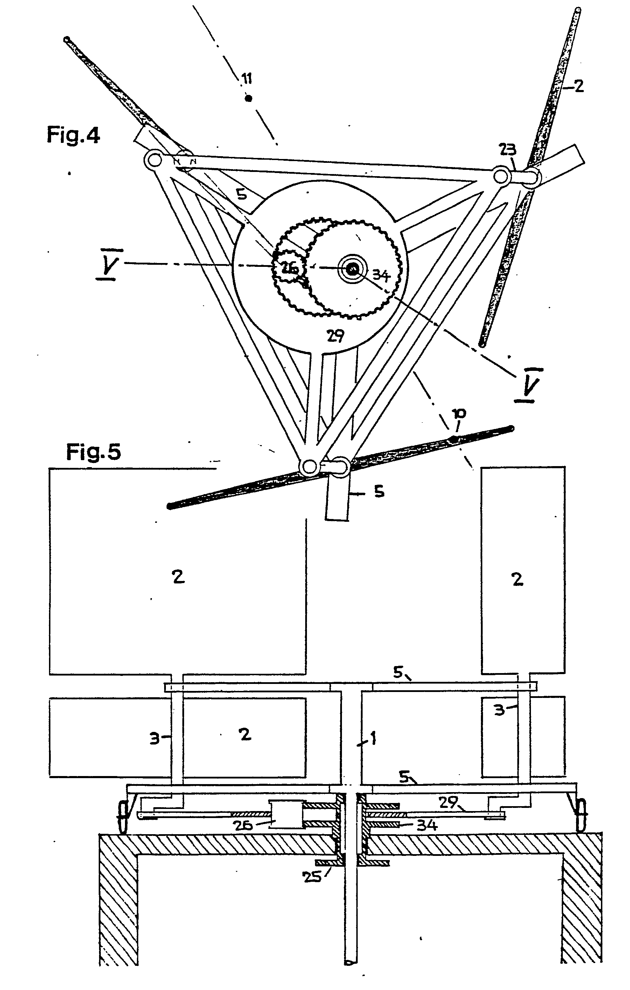

Fig. 4 zeigt den Querschnitt einer Strömungsmaschine wie Fig. 3, deren Trägerteile (5) und Steuerorgan (29) durch Gestänge oder dergleichen entsprechend der Anlagegröße erweitert sind. Größe und Anzahl der Flügel sind beliebig.

Fig. 5 zeigt den Längsschnitt gemäß V—V der Fig. 4 mit Variation der Anordnung der Trägerteile (5) und der Flügel (2).

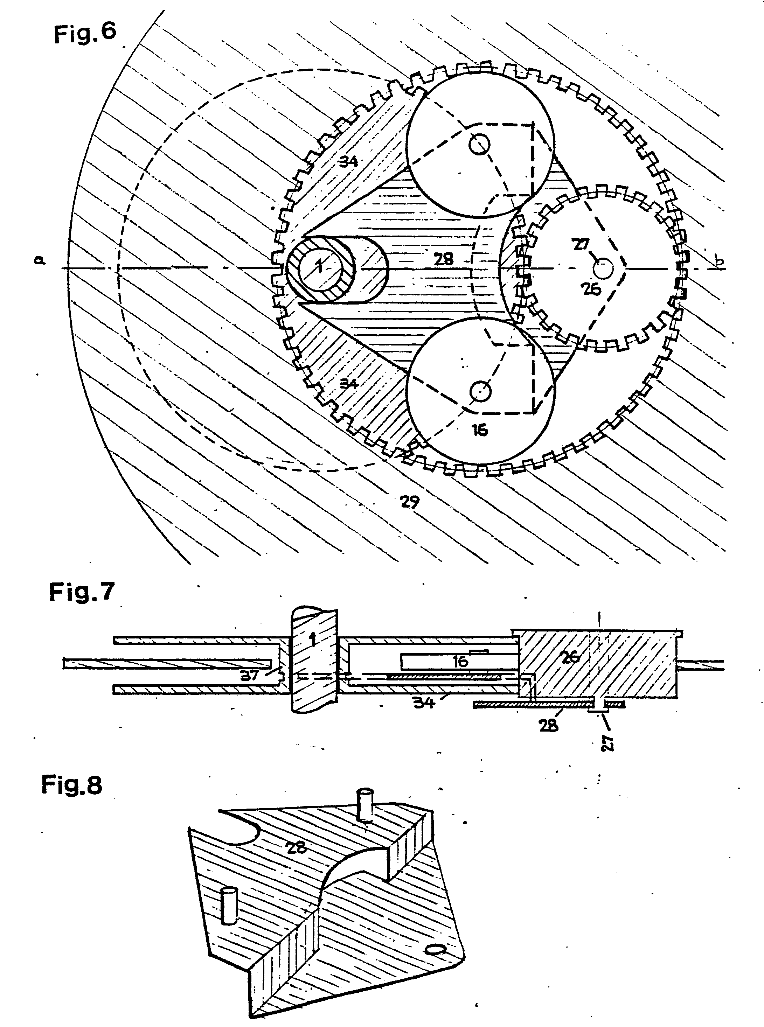

Fig. 6—8 zeigt eine Vorrichtung, um ein Pendeln des Steuerorganes (29) zu vermeiden, wobei ein, an der Zentralachse anliegender Verbindungssteg (28, Fig. 8) vorgesehen ist, in welchem sowohl das umlaufende Zahnrad (26) als auch zwei Stützräder (16), welche an der Innenverzahnung des Steuerorganes abrollen, gelagert sind.

Ein gleicher Effekt wird durch zwei, durch ein Verbindungteil auf Abstand gehaltene, nebeneinander angeordnete, umlaufende Zahnräder erreicht, deren Wälzkreisdurchmesser entsprechend kleiner sind.

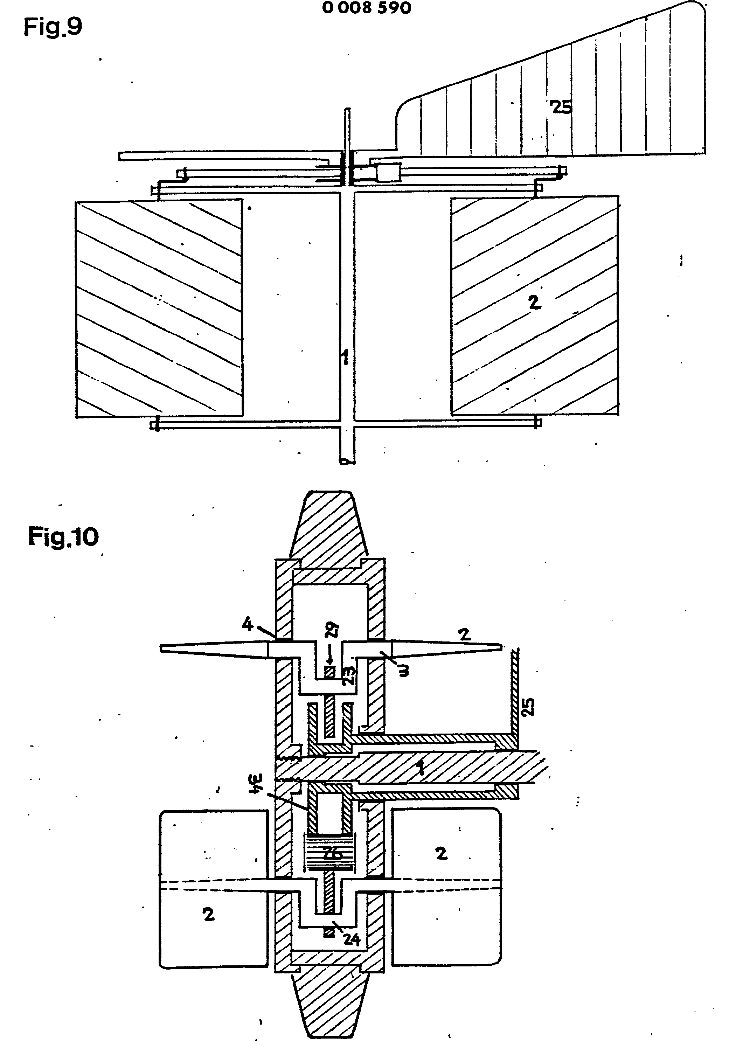

Fig. 9 zeigt eine Strömungsmaschine mit automatischer Anpassung an veränderliche Strömungsrichtungen durch einen durch die Strömung verstellbaren Steuerflügel (25), der mit dem Zahnrad (34) verbunden ist.

Fig. 10 zeigt die Anwendung der erfindungsgemäßen Strömungsmaschine bei einem schwimmfähigen Kraftfahrzeug (Amphibienfahrzeug), wobei die Drehflügel der Maschine beidseitig eines Antriebsrades der Fahrzeuges angeordnet sind. Das auf der Radachse (Zentralachse 1) freilaufende, über den Steuerhebel (25) fixier- oder steuerbare, als Doppelzahnrad mit Nabe ausgebildete Zahnrad (34) greift in das umlaufende Zahnrad (26) ein und bestimmt die Lage des Steuerorganes (29). In den Radscheiben sind beidseitig Kurbeln (23) gelagert, deren Kurbelzapfen mit Flügeln (2) verbunden sind. Die innere Radscheibe läuft frei auf der Nabe des Doppel-Zahnrades (34). Außerdem kann durch entsprechende Flügelverstellung durch den Steuerhebel (25) der Auftrieb des schwimmenden Fahrzeuges beliebig beeinflußt werden.

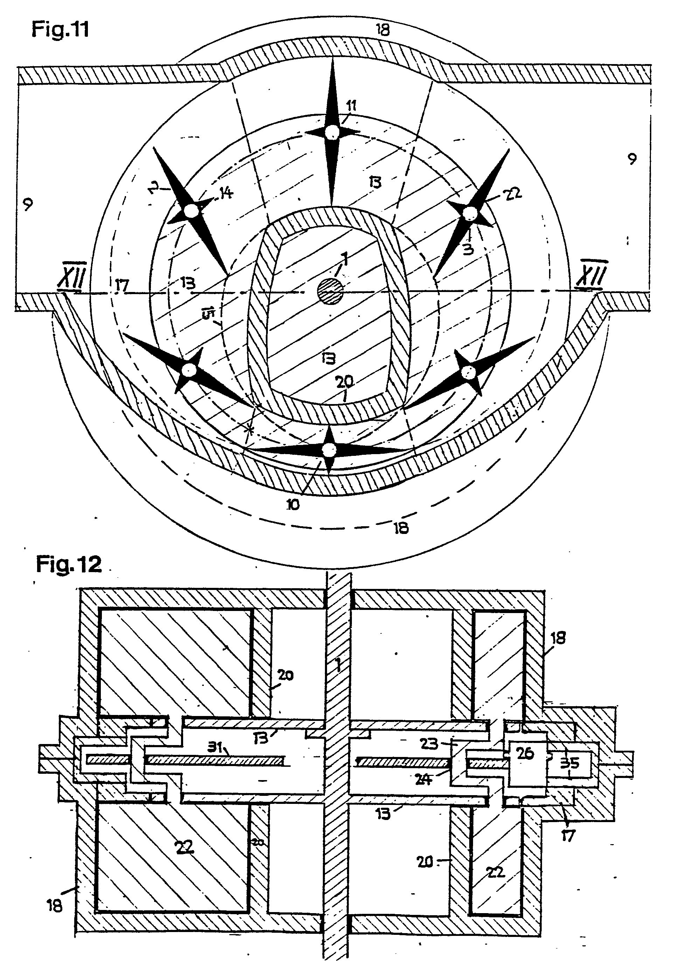

Fig. 11 zeigt in einer weiteren Ausfürung die Strömungsmaschine in einem Gehäuse als Kreiskolbenmaschine mit rechtwinkelig ausgebildeten Kreuzflügeln (22). Die beiden Durchlauftunnels, die aus dem Gehäuse (18 u. 20), dem Trägerteil (13) und einer eventuellen Füllscheibe (17) gebildet werden, umschließen auf je einhalb Flügelachsabstand beidseits des Punktes 11 (s. Fig. 1) den Durchlauf der Flügel (2), bzw. beidseits des Punktes 10 (s. Fig. 1) den Durchlauf der Flügelstutzen (14). Dadurch entstehen zwei ständig durch Flügel und Flügelstutzen getrennte Kammern mit Ein- bzw. Auslaßöffnung (9).

Fig. 12 stellt den Längsschnitt zu Fig. 11 dar. Das Gehäuse (18 und 20), in dem eine Zentralachse (1) mit den Trägerteilen (13) gelagert sind, die Kreuzflügel (22), beidseitig der Kurbeln (23) angeordnet, schließen mit den Flügeln (2) bzw. den Flügelstutzen (14) die Tunnelteile. Das Steuerorgan (31) ist außen verzahnt und kämmt mit dem umlaufenden Zahnrad (26), welches in das, mit dem Gehäuse verbundene, zentrisch zur Zentralachse liegende Zahnrad (35) greift, das als innenverzahnter Doppelzahnring ausgebildet ist. Der Füllring (17) reduziert lediglich die Trägerteile (13) auf das Mindestmaß.

Die Steuerung der Kreuzflügel nach Fig. 11 und 12 erfolgt auf die vorhin beschriebene weise.

Wahlweise kann auch das scheibenförmige Steuerorgan (29, 31) mit einer Doppelverzahnung versehen sein.

## Patentansprüche

1. Strömungsmaschine, als Arbeits — oder Kraftmaschine ausgebildet, mit einer, senkrecht zur Strömungsrichtung angeordneten Zentralachse (1) und mit in einem mit der Zentralachse (1) verbundenen Trägerteil (13, 5) drehbar gehaltenen Drehflügeln (2), welche mittels zur Zentralachse (1) parallelen Flügelachsen (3) auf einer Kreisbahn (12) umlaufen, deren Ebene parallel zur Strömungsrichtung liegt, wobei sich die Mittelebenen aller Drehflügel (2) in jeder Umlaufstellung in einer Achse (10) schneiden, welche durch einen Punkt der Umlaufkreisbahn (12) führt, an dem die Strömungsrichtung den Umlaufkreis (12) tangiert, wobei beim Umlauf der Drehflügel (2) die Lage dieser Schnittachse (10) unverändert bleibt, dadurch gekennzeichnet, daß senkrecht zur Zentralachse (1) ein scheibenförmiges Steuerorgan (29, 31) vorgesehen ist, das mit einer, exzentrisch zur Zentralachse (1) liegenden Innen- oder Außenverzahnung versehen ist, wobei parallel zur Zentralachse (1) Kurbeln (23) vorgesehen sind, die jeweils an einem Ende mit den Flügelachsen (3) fest verbunden sind und am anderen Ende frei drehbar in dem Steuerorgan (29, 31) gelagert sind und daß das Steuerorgan mit seiner Verzahnung über ein, um die Zentralachse (1) umlaufendes Zahnrad (26) eingreift, welches mit einem zentrisch angeordnetem, festsetz- oder steuerbaren Zahnrad (34, 35) kämmt, wobei das Verhältnis des Wälzkreizes der Verzahnung des Steuerorganes (29, 31) zum Wälzkreis des festsetz- oder steuerbaren Zahnrades (34, 35), sowie das Verhältnis des Hebelarmes der Kurbeln (23) zum Wälzkreisdurchmesser des umlaufenden Zahnrades (26) jeweils 1 zu 1 ist.

2. Strömungsmaschine nach Patentanspruch 1, dadurch gekennzeichnet, daß die Flügel (2) zusätzlich, beidseitig auf den Flügelachsen (3), rechtwinkelig zu den Flügeln aufgesetzte Flügelstutzen (14), somit Kreuzflügel (22) aufweisen, daß die Zentralachse (1) frei drehbar von einem Gehäuse (18) gehalten ist, das den Kreuzflügelumlauf im Zusammenwirken mit den Trägerteilen (13) dergestalt umschließt, daß sie um die Punkte (11 und 12), an denen die Flügelbzw. Flügelstutzenebenen senkrecht zur Zentralachse (1) stehen, auf die Länge eines Flügelachsabstandes jeweils einen, dem Flügelbzw. Flügelstutzenumlauf folgenden Tunnel bilden, wobei in den dazwischenliegenden Gehäusebereichen je eine Einlaß- bzw. Auslaßöffnung (9) vorgesehen ist.

3. Strömungsmaschine nach Patentanspruch 1, dadurch gekennzeichnet, daß das scheibenförmige Steuerorgan (29) innen verzahnt ist und das umlaufende Zahnrad (26) in ein, auf der Zentralachse (1) frei laufendes, festsetz- oder steuerbares Zahnrad (34) greift, welches als Doppelzahnrad mit Spielraum für das Steuerorgan ausgebildet ist.

4. Strömungsmaschine nach Patentanspruch 1, dadurch gekennzeichnet, daß das scheibenförmige Steuerorgan (31) außen verzahnt ist und das umlaufende Zahnrad (26) in einen, vom Gehäuse (18) oder dergleichen gehaltenen, zentrisch zur Zentralachse liegenden Zahnring (35) greift, welcher als Doppelzahnring mit Spielraum für das Steuerorgan (31) ausgebildet ist.

5. Strömungsmaschine nach Patentansprüchen 1 und 4, dadurch gekennzeichnet, daß das außen verzahnte scheibenförmige Steuerorgan (31), doppel ausgeführt ist, wobei es über das umlaufende Zahnrad (26) in einen, zwischen beiden Steuerorganteilen liegenden Zahnring greift, der von dem Gehäuse (18) zentrisch zur Zentralachse gehalten ist.

6. Strömungsmaschine nach Patentanspruch 1, dadurch gekennzeichnet, daß das umlaufende Zahnrad (26) Führungsflächen aufweist.

7. Strömungsmaschine nach Patentanspruch 1, dadurch gekennzeichnet, daß ein Verbindungssteg (28) angeordnet ist, in welchem sowohl das umlaufende Zahnrad (26) als auch zwei, an der Innenverzahnung des Steuerorganes abrollende Stützräder (16) gelagert sind.

8. Strömungsmaschine nach Patentanspruch 1, dadurch gekennzeichnet, daß zwei, durch ein Verbindungsteil auf gleichen Abstand gehaltene, nebeneinander liegende, umlaufende Zahnräder (26) mit dem scheibenförmigen Steuerorgan (29, 31) und dem zentrisch angeordneten Zahnrad (34, 35) kämmen.

9. Strömungsmaschine nach Patentanspruch 1, dadurch gekennzeichnet, daß die Kurbeln (23) beidseitig Hebelarme aufweisen und beidseitig mit Flügeln (2) bzw. Kreuzflügeln (22) verbinden sind.

10. Verwendung einer Strömungsmaschine nach Anspruch 1, 3 und 9 beim Antrieb eines schwimmfähigen Kraftfahrzeuges, dadurch gekennzeichnet, daß die Strömungsmaschine in das Antriebsrad des Fahrzeuges eingebaut ist, wobei die Flügel (2) beidseitig außerhalb des Rades angebracht sind und der Steuermechanismus für die Flügel (2) im Inneren des Rades angeordnet ist.

## Claims

1. A fluid-flow machine in the form of a processing machine or a prime mover, having a central shaft (1) disposed perpendicular to the direction of flow and having rotating vanes (2) which are held for rotation in a carrier member (13, 5) connected to the central shaft (1) and which rotate on spindles (3), parallel to the central shaft (1) and lying on a circular path (12) the plane of which lies parallel to the direction of flow, wherein the median planes of all the vanes (2) intersect, in every position of rotation, in an axis (10) which extends through a point on the circular path of rotation (12) at which the direction of flow is tangent to the circle of rotation (12), the position of this axis of intersection (10) remaining unaltered during the rotation of the vanes (2), characterised in that a disc shaped control member (29, 31) having internal or external teeth lying eccentrically to the central shaft (1) is provided perpendicular to the central shaft (1), and parallel to the central shaft (1) are cranks (23) which are each rigidly connected, at one end, to the spindles (3) and at the other end are mounted for free rotation in the control member (29, 31), and that the teeth of the control member engage a gear wheel (26) which rotates about the central shaft (1) and which meshes with a centrally mounted, fixed or controllable gear wheel (34, 35), the ratio of the pitch circle of the teeth of the control member (29, 31) to the pitch circle of the fixed or controllable gear wheel (34, 35) and the ratio of the lever arm of the cranks (23) to the diameter of the pitch circle of the rotating gear wheel (26) being 1 to 1 in each case.

2. A fluid flow machine as claimed in Patent Claim 1, characterized in that the vanes (2) additionally comprise stub vanes (14) mounted at both sides on the spindles (3) at right angles to the vanes, hence cross vanes (22), that the central shaft (1) is held for free rotation by a housing (18) which surrounds the cross vanes in cooperation with the carrier members (13) in such a manner that they each form a tunnel following the surfaces of the vanes or stub vanes, passing the points (11 and 12) at which the planes of the vanes or stub vanes are perpendicular to the central shaft (1), over the length of the spacing between the spindles, and an inlet and an outlet (9) respectively are provided in the intervening housing regions.

3. A fluid-flow machine as claimed in Patent Claim 1, characterised in that the disc-shaped control member (29) has internal teeth and the rotating gear wheel (26) engages a fixed or controllable gear wheel (34) which runs freely on the central shaft (1) and which is constructed in the form of a double gear wheel with clearance for the control member.

4. A fluid-flow machine as claimed in Patent Claim 1, characterised in that the disc-shaped control member (31) has external teeth and the rotating gear wheel (26) engages a toothed ring (35) which is held by the housing (18) or the like and lies centrally in relation to the central shaft and which is constructed in the form of a double toothed ring with clearance for the control member (31).

5. A fluid-flow machine as claimed in Patent Claim 1 and 4, characterised in that the externally toothed, disc-shaped control member (31) is of double construction and engages, via the rotating gear wheel (26) a toothed ring which lies between the two parts of the control member and which is held centrally in relation to the central shaft by the housing (18).

6. A fluid-flow machine as claimed in Patent Claim 1, characterized in that the rotating gear wheel (26) has guide surfaces.

7. A fluid-flow machine as claimed in Patent Claim 1, characterised in that a connecting web (28) is provided in which not only the rotating gear wheel (26) but also two jackwheels (16) rolling on the internal teeth of the control member are mounted.

8. A fluid-flow machine as claimed in Patent Claim 1, characterised in that two rotating gear wheels (26), situated side by side and held at the same distance apart by a connecting piece, mesh with the disc-shaped control member (29, 31) and the centrally disposed gear wheel (34, 35).

9. A fluid-flow machine as claimed in Patent Claim 1, characterised in that the cranks (23) have lever arms at both sides and are connected at both sides to vanes (2) or cross vanes (22).

10. The use of a fluid-flow machine as claimed in Claims 1, 3 and 9 in the drive of a floatable motor vehicle, characterized in that the fluid-flow machine is installed in the drive wheel of the vehicle, the vanes (2) being mounted outside the wheel at both sides and the control mechanism for the vanes (2) being disposed in the interior of the wheel.

**Revendications**

1. Turbomachine constituant un engin de travail ou un moteur, pourvue d'un arbre central (1) disposé perpendiculairement au sens d'écoulement d'un courant de fluide et également pourvue de palettes de rotor (2) montées à rotation sur un support (13, 5) lié à cet arbre central (1), ces palettes tournant en satellites suivant un trajet circulaire à l'aide d'axes de palettes (3) parallèles à l'arbre central (1), le plan de ce trajet circulaire se trouvant placé parallèlement au sens de l'écoulement, les plans médians de toutes les palettes (2) en rotation se recoupant, quelles que soient leurs positions lors de leur rotation en satellites, selon un axe (10) passant par un point du trajet circulaire (12) de rotation, en satellite, point où le sens de l'écoulement est tangent au trajet circulaire (12) et ce de telle façon que pendant la rotation en satellite des palettes du rotor (2), la position de cet axe d'intersection (10) reste en permanence la même, caractérisée par le fait qu'elle comporte un organe de commande (29, 31) en forme de disque annulaire placé perpendiculairement à l'arbre central (1), cet organe de commande (29, 31) étant pourvu d'une denture intérieure ou extérieure placée excentriquement par rapport à l'axe central (1), ainsi que des manivelles (23) parallèles à l'axe central (1), solidaires, par l'une de leurs extrémités, des axes des palettes (3) et montées librement à rotation, à leurs autres extrémités, dans l'organe de commande (29, 31), et en ce que l'organe de commande engrène à l'aide de sa denture avec une roue dentée (26) tournant en satellite autour de l'axe central (1), cette roue dentée engrenant également avec une roue dentée centrée (34, 35), fixe ou à orientation commandée autour de cet axe central, d'une part le rapport entre le cercle primitif de la denture de l'organe de commande (29, 31) et le cercle primitif de la denture de la roue dentée (34, 35) fixe ou à orientation commandée et d'autre part également le rapport entre le bras de levier des manivelles (23) et le diamètre du cercle primitif de la roue dentée (26) tournant en satellite étant notamment de 1 à 1.

2. Turbomachine suivant la revendication 1 caractérisée en ce que les palettes (2) comportent en outre, des deux côtés des axes de palettes (3), des bouts de palettes (14) à angle droit par rapport aux palettes (2) en constituant ainsi des palettes en croix (22), l'arbre central (1) étant supporté librement à rotation par un carter (18) qui, du fait de cette conformation et en coopération avec les pièces de support (13), enferme la rotation en satellites desdites palettes en croix et forme des tunnels autour des points (11, 10) à l'endroit desquels les plans des palettes (2) et respectivement des bouts de palette (14) passent par l'arbre central (1), tunnels ayant la longueur du déplacement en satellite et la largeur soit d'une palette soit respectivement d'un bout de palette, ce carter étant pourvu, dans les zones entre ces tunnels, d'un orifice d'entrée et respectivement d'un orifice de sortie (9).

3. Turbomachine suivant la revendication 1 caractérisé en ce que l'organe de commande (29) en forme de disque est pourvu d'une denture intérieure, la roue dentée satellite (26) engrenant avec une roue dentée (34) tournant librement sur l'arbre central (1), fixe par rapport à ce arbre ou à orientation commandée par rapport à cet arbre, cette roue (34) étant constituée sous la forme d'une roue dentée double avec un jeu pour y placer l'organe de cette commande d'orientation.

4. Turbomachine suivant la revendication 1 caractérisée en ce que l'organe de commande (31) en forme de disque est pourvu d'une denture extérieure, la roue dentée satellite (26) engrenant avec un anneau denté (35) supporté par le carter (18) ou similaire de manière à être centrée sur l'arbre central, l'anneau denté (35) étant constitué par un disque annulaire à double denture pourvu d'un jeu pour y placer un organe de commande de l'orientation.

5. Turbomachine suivant la revendication 4 caractérisée en ce que l'organe de commande (31) en forme de de disque annulaire pourvu d'une denture extérieure accuse la forme d'une roue dentée double et il engrène avec un anneau denté placé entre les deux parties de l'organe de commande et entourant la roue tournant en satellite (26), cet anneau étant maintenu centré sur l'arbre central par le carter (18).

6. Turbomachine suivant la revendication 1 caractérisée en ce que la roue dentée (26) tournant en satellite est pourvue de surfaces de guidage.

7. Turbomachine suivant la revendication 1 caractérisée en ce qu'il comporte une traverse de liaison (28), sur laquelle sont montés aussi bien la roue dentée (26) tournant en satellite, que deux roues d'appui (16) roulant sur la denture interne de l'organe de commande.

8. Turbomachine suivant la revendication 1 caractérisée en ce que deux roues dentées (26) tournant en satellites, jouxtantes latéralement, retenues, par un organe de liaison, à distance égale, engrènent en prise avec l'organe de commande (29, 31) en forme de disque annulaire ainsi qu'avec la roue dentée (34, 35) centrée sur l'arbre central.

9. Turbomachine suivant la revendication 1 caractérisée en ce que les manivelles (23) présentent des deux côtés des bras de levier et elles sont reliées également des deux côtes à des palettes (2) ou respectivement à des palettes en croix (22).

10. Application d'une turbomachine selon l'une quelconque des revendications 1, 3 et 9 à l'entraînement d'un véhicule de transport flottant, caractérisé en ce que la turbomachine est encastrée dans la roue d'entraînement du véhicule, notamment les palettes (2) sont montées des deux côtés à l'extérieur de la roue et le mécanisme de commande des palettes (2) est logé à l'intérieur de cette roue.

**Fig.1**

**Fig.2**

**Fig.3**

Fig.4

Fig.5

**Fig.6**

**Fig.7**

**Fig.8**

4

**Fig.9**

25

2

1

**Fig.10**

4

29

2

23

3

25

1

34

26

2

2

24

Fig.11

Fig.12